(19) Europäisches Patentamt
European Patent Office
Office européen des brevets

(11) **EP 4 633 051 A1**

(12) **EUROPEAN PATENT APPLICATION**
published in accordance with Art. 153(4) EPC

(43) Date of publication:
**15.10.2025 Bulletin 2025/42**

(21) Application number: **23910258.5**

(22) Date of filing: **19.12.2023**

(51) International Patent Classification (IPC):
*H04B 7/06* (2006.01)

(52) Cooperative Patent Classification (CPC):
**H04B 7/06; H04W 24/06; H04W 24/10**

(86) International application number:
**PCT/CN2023/139826**

(87) International publication number:
**WO 2024/140328 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022 CN 202211721001**

(71) Applicant: **Huawei Technologies Co., Ltd.**
**Shenzhen, Guangdong 518129 (CN)**

(72) Inventors:
• **CHAI, Xiaomeng**
**Shenzhen, Guangdong 518129 (CN)**
• **CHEN, Jiaxuan**
**Shenzhen, Guangdong 518129 (CN)**
• **LI, Yuan**
**Shenzhen, Guangdong 518129 (CN)**
• **SUN, Yan**
**Shenzhen, Guangdong 518129 (CN)**
• **PANG, Jiyong**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND APPARATUS**

(57) This application provides a communication method and apparatus, to improve reliability of AI-based CSI prediction. The method includes: A terminal apparatus receives first information, where the first information indicates a use of a first channel state information CSI resource, and the use of the CSI resource includes at least one of the following: CSI information collection, artificial intelligence AI model performance monitoring, and AI model inference; and the terminal apparatus sends first CSI information based on the first information; and/or the terminal apparatus monitors performance of an AI model based on the first information, where the first CSI information corresponds to the first CSI resource.

FIG. 5

**Description**

CROSS-REFERENCE TO RELATED APPLICATIONS

This application claims priority to Chinese Patent Application No. 202211721001.6, filed with the China National Intellectual Property Administration on December 30, 2022 and entitled "COMMUNICATION METHOD AND APPARATUS", which is incorporated herein by reference in its entirety.

TECHNICAL FIELD

This application relates to the field of mobile communication technologies, and in particular, to a communication method and apparatus.

BACKGROUND

In a $5^{th}$ generation ($5^{th}$ generation, 5G) mobile communication system, a network device needs to obtain channel state information (channel state information, CSI) between a terminal device and the network device, and perform resource scheduling for uplink or downlink data transmission based on the CSI.
An artificial intelligence (artificial intelligence, AI)-enhanced CSI feedback mechanism is being studied in the $3^{rd}$ generation partnership project ($3^{rd}$ generation partnership project, 3GPP) release (release, R) 18 standard discussion. AI-based CSI prediction is a candidate case. In an AI-based CSI prediction process, several pieces of historical CSI information and/or current CSI information may be input into an AI prediction model, to output predicted future CSI.
However, currently, the terminal device cannot clearly know specific CSI resources that are used to predict future CSI and specific CSI resources that are used to measure CSI information, and therefore the terminal device may process the CSI resources incorrectly. Consequently, an AI-based CSI prediction mechanism cannot work, lowering CSI prediction reliability.

SUMMARY

This application provides a communication method and apparatus, to improve reliability of AI-based CSI prediction.
According to a first aspect, a communication method is provided. The method may be implemented by a terminal device or a component in the terminal device, and the terminal device may also be referred to as a communication apparatus. The component in this application may include, for example, at least one of a chip, a chip system, a processor, a transceiver, a processing unit, or a transceiver unit. An example in which an execution body is the terminal apparatus is used. The method may be implemented by using the following steps: The terminal apparatus receives first information, where the first information indicates a use of a first channel state information CSI resource, and the use of the CSI resource includes at least one of the following: CSI information collection, artificial intelligence AI model performance monitoring, and AI model inference; and the terminal apparatus sends first CSI information based on the first information; and/or the terminal apparatus monitors performance of an AI model based on the first information, where the first CSI information corresponds to the first CSI resource.
According to the method in the first aspect, the terminal apparatus may learn of the use of the CSI information based on first information from a network device, and therefore, may learn which CSI resources may be used to predict the CSI information, to avoid using the CSI resource for an incorrect use Therefore, reliability of CSI prediction can be improved.
In a possible implementation, the AI model is used for CSI prediction.
In a possible implementation, when the use includes the AI model inference, the first CSI information includes CSI information predicted based on the first CSI resource and the AI model; when the use includes the CSI information collection or the AI model performance monitoring, the first CSI information includes a CSI measurement result obtained by measuring the first CSI resource; or when the use includes the AI model performance monitoring, the first CSI information includes a monitoring result of the AI model, and the monitoring result indicates accuracy of a prediction result of the AI model.
According to this implementation, the terminal apparatus may determine predicted CSI information based on the first CSI resource whose use includes the AI model inference; obtain the CSI measurement result based on the first CSI resource whose use includes the CSI information collection or the AI model performance monitoring, and use the CSI measurement result as the first CSI information; or obtain the monitoring result based on the first CSI resource whose use includes the AI model performance monitoring, and use the monitoring result as the first CSI information. Therefore, appropriate CSI information may be fed back to the network device based on the use, to further improve accuracy of prediction.

In a possible implementation, the terminal apparatus sends capability information. The capability information includes at least one of the following: information indicating whether the terminal apparatus supports CSI prediction; information about a requirement of an AI model of the terminal apparatus for a periodicity of input CSI information; information about a requirement of the AI model of the terminal apparatus for an amount of input CSI information; information about a moment of predicted CSI information output by the AI model of the terminal apparatus; information about a requirement of the AI model of the terminal apparatus for a frequency domain attribute of the input CSI information; frequency domain attribute information of CSI information that can be output by the AI model of the terminal apparatus; information about a requirement of the AI model of the terminal apparatus for a dimension of input and/or output CSI information; information about a requirement of the AI model of the terminal apparatus for a type of the input and/or output CSI information; and information about a requirement of the AI model of the terminal apparatus for a reference signal used for CSI information measurement.

According to this implementation, the network device may determine a use indication of the CSI resource with reference to the capability information of the terminal apparatus, to improve accuracy of a use configuration.

In a possible implementation, the first information further indicates a compression configuration of CSI information. The terminal apparatus may send the first CSI information based on the compression configuration.

According to this implementation, the first information may further indicate the compression configuration. The network device may configure different CSI compression manners based on different requirements for performance and complexity. Therefore, a flexible configuration of the compression manner can be implemented.

In a possible implementation, the first information may specifically indicate the use of a CSI resource in a first resource group, and the CSI resource in the first resource group includes the first CSI resource.

According to this implementation, the use of the CSI resource may be configured by groups. Therefore, a flexible configuration of the use at a plurality of granularities is implemented.

In a possible implementation, the first information further indicates a use of a second CSI resource in the first resource group, and the use of the second CSI resource is different from that of the first CSI resource.

According to this implementation, uses of different CSI resources in a same resource group may be different, to improve resource configuration flexibility.

In a possible implementation, the CSI resource in the first resource group and a CSI resource in a second resource group are jointly used, and a use of the CSI resource in the second resource group is the same as the use of the CSI resource in the first resource group.

According to this implementation, joint use of a plurality of groups of CSI resources with a same use may be supported. For example, a plurality of groups of resources whose use includes the AI model inference may be jointly used for CSI information prediction to improve prediction performance.

In a possible implementation, the CSI resource in the first resource group and the CSI resource in the second resource group correspond to a same CSI report configuration; the CSI resource in the first resource group and the CSI resource in the second resource group are associated to a same AI model; or the CSI resource in the first resource group and the CSI resource in the second resource group have a quasi co-location QCL relationship.

According to this implementation, CSI resources that need to be jointly used may be flexibly determined.

In a possible implementation, the terminal apparatus receives second information. The second information indicates that the CSI resource in the first resource group and the CSI resource in the second resource group are jointly used.

According to this implementation, the CSI resources that need to be jointly used may be flexibly indicated.

In a possible implementation, the first information specifically indicates a CSI resource pattern, and the CSI resource pattern is used for determining a time domain position of a CSI resource whose use is at least one of CSI information collection, AI model performance monitoring, and AI model inference.

According to this implementation, the use of the CSI resource may be flexibly indicated.

In a possible implementation, the first information further indicates at least one of the following: the AI model and a prediction configuration of the CSI information.

According to this implementation, same signaling may indicate the prediction configuration of the AI model and/or the CSI information, and indicate the use of the CSI resource, so that signaling overheads are reduced.

According to a second aspect, a communication method is provided. The method may be implemented by a network device or a component in the network device, and the network device may also be referred to as a communication apparatus. The component in this application may include, for example, at least one of a chip, a chip system, a processor, a transceiver, a processing unit, or a transceiver unit. An example in which an execution body is the network device is used. The method may be implemented by using the following steps: The network device sends first information to a terminal apparatus, where the first information indicates a use of a first channel state information CSI resource, and the use of the CSI resource includes at least one of the following: CSI information collection, artificial intelligence AI model performance monitoring, and AI model inference.

In a possible implementation, the network device may further receive first CSI information from the terminal apparatus. The first CSI information corresponds to the first CSI resource.

In a possible implementation, the AI model is used for CSI prediction.

In a possible implementation, when the use includes the AI model inference, the first CSI information includes CSI information predicted based on the first CSI resource and the AI model; when the use includes the CSI information collection or the AI model performance monitoring, the first CSI information includes a CSI measurement result obtained by measuring the first CSI resource; or when the use includes the AI model performance monitoring, the first CSI information includes a monitoring result of the AI model, and the monitoring result indicates accuracy of a prediction result of the AI model.

In a possible implementation, the network device may further receive capability information of the terminal apparatus. The capability information includes at least one of the following: information indicating whether the terminal apparatus supports CSI prediction; information about a requirement of an AI model of the terminal apparatus for a periodicity of input CSI information; information about a requirement of the AI model of the terminal apparatus for an amount of input CSI information; information about a moment of predicted CSI information output by the AI model of the terminal apparatus; information about a requirement of the AI model of the terminal apparatus for a frequency domain attribute of the input CSI information; frequency domain attribute information of CSI information that can be output by the AI model of the terminal apparatus; information about a requirement of the AI model of the terminal apparatus for a dimension of input and/or output CSI information; information about a requirement of the AI model of the terminal apparatus for a type of the input and/or output CSI information; and information about a requirement of the AI model of the terminal apparatus for a reference signal used for CSI information measurement.

In a possible implementation, the first information further indicates a compression configuration of CSI information.

In a possible implementation, the first information specifically indicates the use of a CSI resource in a first resource group, and the CSI resource in the first resource group includes the first CSI resource.

In a possible implementation, the first information further indicates a use of a second CSI resource in the first resource group, and the use of the second CSI resource is different from that of the first CSI resource.

In a possible implementation, the CSI resource in the first resource group and a CSI resource in a second resource group are jointly used, and a use of the CSI resource in the second resource group is the same as the use of the CSI resource in the first resource group.

In a possible implementation, the CSI resource in the first resource group and the CSI resource in the second resource group correspond to a same CSI report configuration; the CSI resource in the first resource group and the CSI resource in the second resource group are associated to a same AI model; or the CSI resource in the first resource group and the CSI resource in the second resource group have a quasi co-location QCL relationship.

In a possible implementation, the network device sends second information. The second information indicates that the CSI resource in the first resource group and the CSI resource in the second resource group are jointly used.

In a possible implementation, the first information specifically indicates a CSI resource pattern, and the CSI resource pattern is used for determining a time domain position of a CSI resource whose use is at least one of CSI information collection, AI model performance monitoring, and AI model inference.

In a possible implementation, the first information further indicates at least one of the following: the AI model and a prediction configuration of the CSI information.

According to a third aspect, a communication apparatus is provided. The apparatus may implement the method according to the first aspect or the second aspect and any possible designs of the first aspect or the second aspect. The apparatus has functions of the foregoing network device or terminal apparatus. The apparatus is, for example, a terminal device, a functional module in the terminal device, a network device, or a functional module in the network device.

In an optional implementation, the apparatus may include modules that perform and that are in one-to-one correspondence with the method/operations/steps/actions described in the first aspect or the second aspect. The module may be a hardware circuit, or may be software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a collective term for these functional modules.

For example, when the apparatus is configured to perform the method described in the first aspect or the second aspect, the apparatus may include the communication unit and the processing unit.

According to a fourth aspect, an embodiment of this application further provides a communication apparatus, including a processor that is configured to execute a computer program (or computer-executable instructions) stored in a memory. When the computer program (or the computer-executable instructions) is executed, the apparatus is enabled to perform the method according to the first aspect or the second aspect and the possible implementations of the first aspect or the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or a communication interface of another type.

According to a fifth aspect, a computer-readable storage medium is provided. The computer-readable storage medium is configured to store a computer program or instructions. When the computer program or the instructions are run, the method according to the first aspect or the second aspect and any possible implementations of the first aspect or the second aspect is implemented.

According to a sixth aspect, a computer program product including instructions is provided. When the computer program product is run on a computer, the method according to the first aspect or the second aspect and any possible implementations of the first aspect or the second aspect is implemented.

According to a seventh aspect, an embodiment of this application further provides a communication apparatus, and the communication apparatus is configured to perform the method according to the first aspect or the second aspect and the possible implementations of the first aspect or the second aspect.

According to an eighth aspect, a chip system is provided. The chip system includes a logic circuit (which may alternatively be understood as that the chip system includes a processor, and the processor may include a logic circuit, and the like), and may further include an input/output interface. The input/output interface may be configured to input a message, or may be configured to output a message. The input/output interface may be a same interface. In other words, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than sending and receiving functions in the method according to the first aspect or the second aspect and any possible implementations of the first aspect or the second aspect. The logic circuit may be further configured to transmit a message to the input/output interface, or receive, from the input/output interface, a message from another communication apparatus. The chip system may be configured to implement the method according to the first aspect or the second aspect and any possible implementations of the first aspect or the second aspect. The chip system may include a chip, or may include a chip and another discrete device.

Optionally, the chip system may further include a memory, and the memory may be configured to store instructions. The logic circuit may invoke the instructions stored in the memory to implement a corresponding function.

According to a ninth aspect, a communication system is provided. The communication system may include at least one terminal apparatus and a network device. Any terminal apparatus may be configured to perform the method according to the first aspect and any possible implementations of the first aspect. The network device may be configured to perform the method according to the second aspect and any possible implementations of the second aspect.

For technical effects brought by the second aspect to the ninth aspect, refer to the descriptions of the first aspect. Details are not described herein again.

BRIEF DESCRIPTION OF DRAWINGS

FIG. 1 is a diagram of an architecture of a wireless communication system according to an embodiment of this application;

FIG. 2 is a diagram of a structure of a neuron;

FIG. 3 is a diagram of a structure of a neural network;

FIG. 4 is a principle diagram of AI-based CSI prediction;

FIG. 5 is a schematic flowchart of a communication method according to an embodiment of this application;

FIG. 6 is a diagram of a periodic pattern of a CSI resource according to an embodiment of this application;

FIG. 7 is a diagram of another periodic pattern of a CSI resource according to an embodiment of this application;

FIG. 8 is a diagram of joint use of CSI resource groups according to an embodiment of this application;

FIG. 9 is a diagram of independent use of a CSI resource group according to an embodiment of this application;

FIG. 10 is a diagram of a structure of a communication apparatus according to an embodiment of this application;

FIG. 11 is a diagram of a structure of another communication apparatus according to this application; and
FIG. 12 is a diagram of a structure of another communication apparatus according to this application.

DESCRIPTION OF EMBODIMENTS

Embodiments of this application provide a communication method and apparatus. The method and the apparatus are based on a same inventive concept. Because the method and the apparatus have a similar problem-resolving principle, for implementations of the apparatus and the method, refer to each other, and repeated descriptions are not described. In descriptions of embodiments of this application, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this application, "at least one" means one or more, and "a plurality of" means two or more. In addition, it should be understood that in descriptions of this application, terms such as "first" and "second" are merely used for distinguishing and description, but should not be understood as indicating or implying relative importance, or should not be understood as indicating or implying a sequence.

The communication method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or may be applied to various future communication systems, for example, a 6th generation (6th generation, 6G) communication system. The method provided in embodiments of this application may be further applied to a Bluetooth system, a Wi-Fi system, a LoRa system, or an internet of vehicles system. The method provided in embodiments of this application may be further applied to a satellite communication system. The satellite communication system may be integrated with the foregoing communication system.

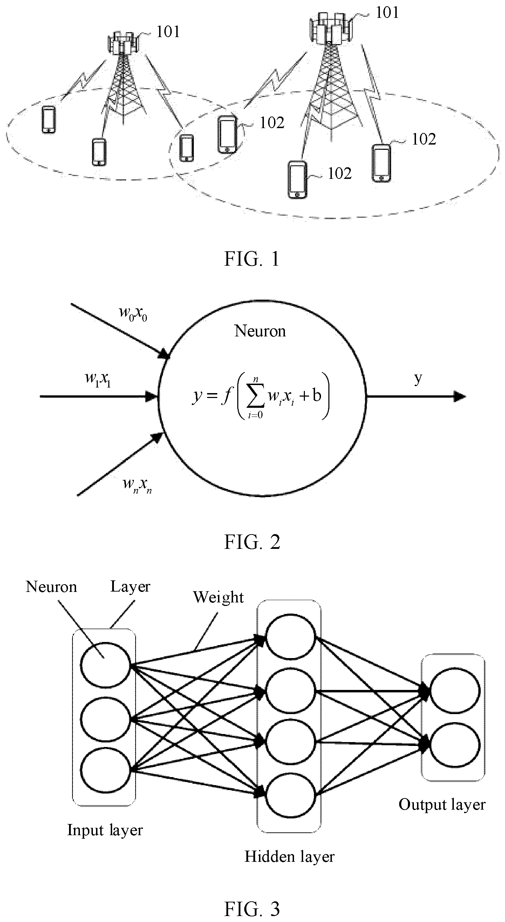

For ease of understanding embodiments of this application, an application scenario used in this application is described by using an architecture of a communication system shown in FIG. 1 as an example. As shown in FIG. 1, a communication system 100 includes a network device 101 and a terminal device 102. The apparatus provided in embodiments of this application may be used in the network device 101 or the terminal device 102. It may be understood that FIG. 1 shows only one possible architecture of the communication system to which embodiments of this application may be applied. In another possible scenario, the architecture of the communication system may alternatively include another device.

The network device 101 is a node in a radio access network (radio access network, RAN), and may also be referred to as a base station or a RAN node (or device). Currently, some examples of access network devices are: a gNB/NR-NB, a macro base station, a micro base station, an indoor base station, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP), a satellite device, a relay node, a donor node, a radio controller in a cloud radio access network (cloud radio access network, CRAN) scenario, a road side unit (road side unit, RSU) in a vehicle-to-everything (vehicle-to-everything, V2X) technology, or a network device in a 5G communication system, or an access network device or a module of the access network device in an open access network (open RAN, ORAN) system, or a network device in a future possible communication system. Alternatively, the network device 101 may be another device that has a network device function. For example, the network device 101 may alternatively be a device that assumes the network device function in device-to-device (device-to-device, D2D) communication, internet of vehicles communication, or machine-to-machine communication. Alternatively, the network device 101 may be a network device in a possible future communication system. It may be understood that a plurality of access network devices in the communication system may be of a same type or different types.

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein. In the ORAN system, the CU may also be referred to as an O-CU, the DU may also be referred to as an open (open, O)-DU, the CU-CP may also be referred to as an O-CU-CP, the CU-UP may also be referred to as an O-CU-UP, and the RU may also be referred to as an O-RU.

The terminal device 102 may also be referred to as user equipment (user equipment, UE), a mobile station (mobile station, MS), a mobile terminal (mobile terminal, MT), or the like, and is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a laptop computer, a palmtop computer, a mobile internet device (mobile internet device, MID), a wearable device (for example, a smartwatch, a smart band, or a pedometer), a vehicle-mounted device (for example, a car, a bicycle, an electric car, an airplane, a ship, a train, or a high-speed rail), a virtual reality (virtual reality, VR) device, an augmented reality (augmented reality, AR) device, a wireless terminal in industrial control, a smart household device (for example, a refrigerator, a television, an air conditioner, or a meter), an intelligent robot, workshop equipment, a wireless terminal in self-driving, a wireless terminal in remote surgery, a wireless terminal in smart grid (smart grid), a wireless terminal in transportation safety, a wireless terminal in smart city, a wireless terminal in smart home, a flight device (for example, an intelligent robot, a hot air balloon, an uncrewed aerial vehicle, or an airplane), or the like. The terminal device may alternatively be another device having a terminal function. For example, the terminal device may alternatively be a device functioning as a terminal function in D2D communication. In this application, a terminal device having a wireless transceiver function and a chip that can be disposed in the terminal device are collectively referred to as the terminal device.

With reference to the communication system shown in FIG. 1, the following describes in detail the communication method provided in embodiments of this application.

To better understand the solutions provided in embodiments of this application, the following first describes some terms, concepts, or procedures in embodiments of this application.

1. AI

AI refers to intelligence presented by machines made by people. Generally, the artificial intelligence is a technology that presents human intelligence by using a normal computer program. The artificial intelligence may be defined as a machine or computer that mimics humans and has cognitive functions related to human thinking, such as learning and resolving problems. The artificial intelligence can learn from past experience, make reasonable decisions, and respond quickly. An objective of the artificial intelligence is to understand intelligence by building symbolic reasoning or computer programs for reasoning.

2. Machine learning

Machine learning is a way to implement artificial intelligence, that is, to resolve problems in the artificial intelligence by using the machine learning as a means. A machine learning theory is mainly to design and analyze some algorithms that enable a computer to automatically learn. A machine learning algorithm is an algorithm that automatically analyzes data to obtain a rule and uses the rule to predict unknown data. The machine learning algorithm involves a large quantity of statistical theories. The machine learning is closely related to inferential statistics and is also referred to as statistical learning theory.

3. AI model

An AI model is an algorithm or a computer program that can implement an AI function. The AI model represents a mapping relationship between an input and an output of the model. The AI model may be a neural network or another machine learning model. In this application, an AI model used for CSI prediction may be referred to as an AI model, or may be referred to as a model for short.

4. Neural network (neural network, NN)

A neural network is a specific implementation form of machine learning. According to the universal approximation theorem, the neural network can approximate any continuous function in theory, so that the neural network has a capability of learning any mapping. Therefore, the neural network can accurately perform abstract modeling for a complex high-dimension problem.

In the neural network, each neuron performs a weighted addition operation on an input value of the neuron, and for a result obtained through weighted addition, an output is generated by using an activation function. FIG. 2 is a diagram of a structure of a neuron. It is assumed that inputs of the neuron are $x = [x_0, x_1, ..., x_n]$, weights corresponding to the inputs are respectively $w = [w, w_1, ..., w_n]$, and an offset for performing weighted summation is $b$. Forms of an activation function may be diversified. It is assumed that an activation function of a neuron is $y = f(z) = \max(0, z)$. In this case, an output of the neuron is $y = f\left(\sum_{i=0}^{i=n} w_i * x_i + b\right) = \max(0, \sum_{i=0}^{i=n} w_i * x_i + b)$ . For another example, an activation function of a neuron is y = *f(z)* = *z*, and an output of the neuron is

$$y = f\left(\sum_{i=0}^{i=n} w_i * x_i + b\right) = \sum_{i=0}^{i=n} w_i * x_i + b$$ . *b* may be any possible value, for example, a decimal, an integer (0, a positive integer, or a negative integer), or a complex number. Activation functions of different neurons in a neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 3 is a diagram of a layer relationship of a neural network. In a possible implementation, the neural network includes an input layer and an output layer. The input layer of the neural network performs neuron processing on a received input, and then transfers a result to the output layer. The output layer obtains an output result of the neural network. In another possible implementation, the neural network includes an input layer, a hidden layer, and an output layer. The input layer of the neural network performs neuron processing on a received input, and then transfers a result to an intermediate hidden layer. The hidden layer transfers a calculation result to the output layer or an adjacent hidden layer. Finally, the output layer obtains an output result of the neural network. One neural network may include one hidden layer or a plurality of hidden layers that are connected in sequence. This is not limited. In a training process of the neural network, a loss function may be defined. The loss function describes a gap or difference between an output value of the neural network and an ideal target value of the neural network. A specific form of the loss function is not limited in this application. A training process of the neural network is a process of adjusting a parameter of the neural network, such as a quantity of layers of the neural network, a width of the neural network, a weight of a neuron, and/or a parameter in an activation function of the neuron, so that a value of the loss function is less than a threshold or meets a target requirement.

5. AI-based CSI prediction

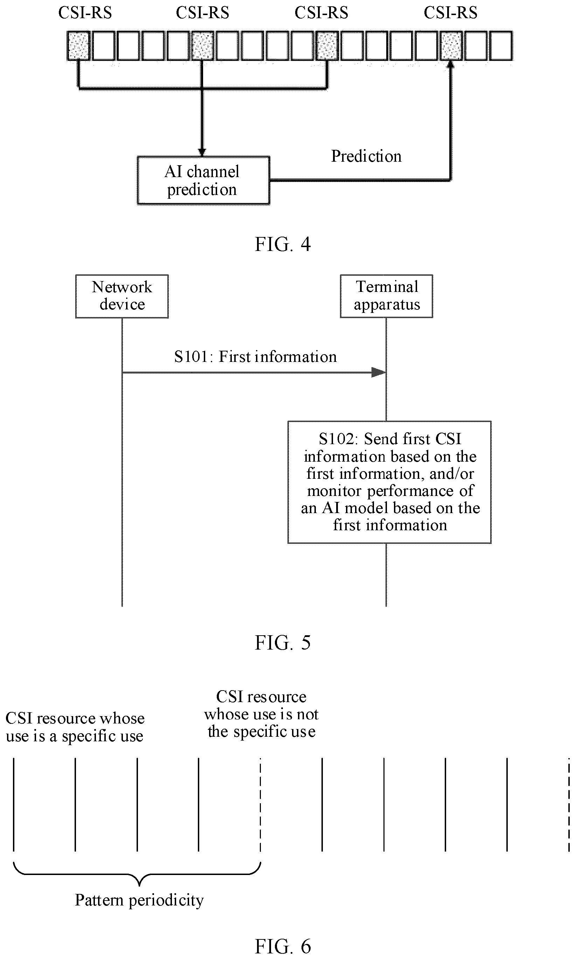

In a process of AI-based CSI prediction, several pieces of historical CSI information and/or current CSI information is input into an AI prediction model, and the AI prediction model may output predicted future CSI information. As shown in FIG. 4, three pieces of historical CSI information are input into the AI prediction model, and the AI prediction model may output CSI information at a specific future moment. The future CSI information may be used by the network device to perform resource scheduling at a future moment, to improve communication performance.

In this application, the CSI information may be a CSI measurement result, or may be a CSI report used for carrying a measurement result in some scenarios.

6. Configuration manner of a CSI resource

As shown in Table 1, the network device may configure, by using a CSI report configuration (CSI-ReportConfig), a CSI resource associated with a CSI report. One CSI report may be associated with a maximum of three CSI resource configurations. As shown in Table 1-1, one CSI resource configuration identifier (CSI-ResourceConfigId) may correspond to configurations of a plurality of CSI resources. A 1st CSI resource may be independently used for CSI measurement, or the 1st CSI resource may be used together with the other two CSI resources for CSI measurement.

Table 1-1

| |
|---|
| CSI-ReportConfig ::=      SEQUENCE { |
|    reportConfigId        CSI-ReportConfigId, |
|    carrier        ServCellIndex |
| OPTIONAL,    -- Need S |
|    resourcesForChannelMeasurement      CSI-ResourceConfigId, |
|    csi-IM-ResourcesForInterference      CSI-ResourceConfigId |
| OPTIONAL,    -- Need R |
|    nzp-CSI-RS-ResourcesForInterference      CSI-ResourceConfigId |
| OPTIONAL,    -- Need R |

As shown in Table 1-2, one piece of CSI-ResourceConfig may be configured with one or more resource set lists (ResourceSetList), and each ResourceSetList includes one or more resource sets (ResourceSet).

Table 1-2

| |
|---|
| CSI-ResourceConfig ::=      SEQUENCE { |
|    csi-ResourceConfigId      CSI-ResourceConfigId, |
|    csi-RS-ResourceSetList      CHOICE { |
|       nzp-CSI-RS-SSB      SEQUENCE { |
|          nzp-CSI-RS-ResourceSetList    SEQUENCE (SIZE (1..maxNrofNZP-CSI-RS-ResourceSetsPerConfig)) OF NZP-CSI-RS-ResourceSetId |
| OPTIONAL, -- Need R |
|          csi-SSB-ResourceSetList      SEQUENCE (SIZE (1..maxNrofCSI-SSB-ResourceSetsPerConfig)) OF CSI-SSB-ResourceSetId    OPTIONAL    -- Need R |
|       }, |
|       csi-IM-ResourceSetList      SEQUENCE (SIZE (1..maxNrofCSI-IM-ResourceSetsPerConfig)) OF CSI-IM-ResourceSetId |
|    } |

As shown in Table 1-3, one ResourceSet may be associated with a plurality of CSI-RS resources (CSI-RS-Resource). The CSI-RS-Resource may be a periodic CSI resource, a semi-persistent CSI resource, or an aperiodic CSI resource. The aperiodic CSI resource is an independent CSI-RS resource, and both the periodic CSI resource and the semi-persistent CSI resource include a plurality of CSI-RS resources.

Table 1-3

| NZP-CSI-RS-ResourceSet ::= SEQUENCE { |
| --- |
| nzp-CSI-ResourceSetId NZP-CSI-RS-ResourceSetId, |
| nzp-CSI-RS-Resources SEQUENCE (SIZE (1..maxNrofNZP-CSI-RS-ResourcesPerSet)) OF NZP-CSI-RS-ResourceId, |
| } |

Generally, an AI model has good inference performance only for data that has close distribution to training data. For an AI model used for CSI prediction, if three pieces of CSI information with an interval of 5 milliseconds (ms) are used to predict CSI information at a future 5 ms during training, that is, CSI information at moments t-10 ms, t-5 ms, and t is input to the AI model, and a label is CSI information at a moment t+5 ms, when the AI model is used for inference, the AI model can accurately predict the CSI information at the future 5 ms only when the three pieces of CSI information with an interval of 5 milliseconds (ms) are input. However, based on a CSI report configuration, a plurality of CSI resources may be configured for the terminal device, and some CSI resources may not be used for the AI model. If which measurement results of CSI resources can be input into an AI prediction model for prediction are not aligned between the terminal device and the network device, an output of the AI prediction model may not be the CSI information at the moment t+5 ms. As a result, communication performance is affected. In addition, because the AI prediction model is usually trained by the terminal device and used by the terminal device, the network device does not know a specific configuration of CSI information required by the AI prediction model to perform CSI prediction. If a CSI resource configured by the base station is not suitable for the terminal device to perform AI prediction model, the UE cannot correctly use the AI prediction model to implement prediction.

Therefore, a current configuration solution of the CSI resource cannot meet a requirement of a mechanism of AI-based CSI prediction, and consequently, reliability of the mechanism of CSI prediction is lowered.

To enable the configuration solution of the CSI resource to meet the requirement of the mechanism of AI-based CSI prediction, and improve the reliability of CSI prediction, embodiments of this application provide a communication method. The following describes the method with reference to FIG. 5. FIG. 5 is described by using an example in which execution bodies are a terminal apparatus and a network device. The terminal apparatus may include the terminal device shown in FIG. 1, or include a component in the terminal device, such as a processor, a chip, a processing unit, or a communication unit. The terminal device may also be replaced with a component in the network device. According to the method, the terminal apparatus may learn of a use of a CSI resource based on received first information, to report CSI information by using an appropriate report configuration and based on the use of the CSI resource, or determine not to report the CSI information based on the use. The use of the CSI resource includes at least one of CSI information collection, AI model performance monitoring, and CSI information prediction, so that the terminal apparatus can perform CSI prediction based on an appropriate CSI resource, to meet a CSI prediction requirement.

As shown in FIG. 5, the communication method may include the following steps.

S101: A network device sends first information.

Correspondingly, the terminal apparatus receives the first information.

The first information indicates a use of a first CSI resource, and the use of the CSI resource includes at least one of the following: CSI information collection, AI model performance monitoring, and AI model inference. The AI model may be used for CSI prediction.

In this application, the CSI resource may be a resource used for carrying a channel state information reference signal (channel state information reference signal, CSI-RS), and therefore may also be referred to as a CSI-RS resource. The terminal apparatus may perform CSI measurement (or referred to as RS resource channel measurement, channel measurement, pilot signal measurement, or the like) based on the CSI-RS resource, to obtain a CSI measurement result including at least one of channel response information, a channel quality indicator (channel quality indicator, CQI), a rank index (rank index, RI) of downlink data transmission, and a precoding matrix indicator (precoding matrix index, PMI). The terminal apparatus may further report a CSI measurement result to the network device by using a CSI report.

The following separately describes the use of the first CSI resource.

(1) CSI information collection, or referred to as data collection use

The use means that the network device needs to collect CSI information determined based on the CSI resource, and the CSI information may be obtained by performing channel measurement on the CSI resource. The collected CSI information may be used for AI model training, AI model update, and the like. Therefore, for the CSI resource for the use, the terminal device may determine a CSI measurement result of the CSI resource and report the CSI measurement result to the network device.

Optionally, the CSI measurement result may be reported in a reporting manner corresponding to the use of CSI information collection. For example, compared with a CSI resource whose use is AI model inference, the CSI measurement result corresponding to the CSI resource whose use is CSI information collection is usually used as a label for AI model training. Therefore, high precision is required.

(2) AI model inference, or referred to as model inference use

The use means that the terminal device needs to predict CSI information at a future time domain position based on a CSI measurement result of the CSI resource and an AI model. The terminal device needs to report the predicted CSI information to the network device, so that the network device performs data transmission based on the predicted CSI information.

When performing CSI prediction by using the AI model, the terminal device can input only CSI information corresponding to a CSI resource whose use is model inference into the AI model.

Optionally, the CSI information may be reported in a reporting manner corresponding to the use of AI model inference.

(3) AI model performance monitoring, or referred to as model monitoring use

The use means that the terminal device may monitor performance of the AI model based on a CSI measurement result of the CSI resource. For example, when the use of the first CSI resource is the AI model performance monitoring, the terminal device may predict CSI information of the first CSI resource by using the AI model, measure the first CSI resource to obtain an actual CSI measurement result, then may further compare a difference between the predicted CSI information and the actual CSI measurement result, and determine accuracy of the AI model based on the difference. Optionally, if the difference between the predicted CSI information and the actual CSI measurement result is large, the terminal device may trigger a training process of the AI model.

Optionally, for a CSI resource for the use, the terminal device may not report a CSI measurement result corresponding to the CSI resource to the network device. Alternatively, the terminal device may report a monitoring result. The monitoring result may indicate accuracy of a prediction result of the AI model, or the monitoring result may be a determining result that is determined, based on the accuracy, whether the AI model needs to be updated.

Optionally, a same CSI resource in this application may be configured for one or more uses. For example, the first CSI resource may be configured for model inference and model monitoring. To be specific, the UE may input CSI information obtained by measuring CSI resources into the AI model, or may monitor the performance of the AI model based on the CSI information obtained by measuring the CSI resources.

In a possible implementation, the use of the CSI resource in this application may be configured for a single CSI resource. For example, a same group of CSI resources may have different uses. A same group of CSI resources may refer to a plurality of resources corresponding to a same CSI report configuration (or a CSI report configuration identifier), a plurality of resources corresponding to a same CSI-RS resource set list, or a plurality of resources corresponding to a same CSI-RS resource set. For example, the network device may configure the use of the CSI resource for one CSI-RS resource identifier.

In another possible implementation, the use of the CSI resource may alternatively be configured for a CSI resource set including a plurality of (or a group of) CSI resources. For example, if the network device configures the use of the CSI resource for a first resource group, uses of a plurality of CSI resources (which may include the first CSI resource) in the first resource group are all the use. For a configuration manner for a plurality of (or a group of) CSI resources, the network device may configure uses of the CSI resources for one CSI report configuration (or a CSI report configuration identifier (CSI-ReportConfigId)). For example, the network device may configure uses of CSI resources for CSI-ReportConfigId in Table 1-1, and a plurality of CSI-RS resources corresponding to the CSI report configuration identifier may be used as a group of CSI resources, and the CSI resources are all configured for the use. For another example, the use of the CSI resource may be configured for CSI-ResourceConfigId in Table 1-1. In this case, a plurality of CSI-RS resources associated with CSI-ResourceConfigId may be used as a group of CSI resources. In addition, the network device may configure a use of a CSI resource for a CSI-RS resource set list. In this case, a plurality of CSI-RS resources associated with the CSI-RS resource set list may be used as a group of CSI resources, and the CSI resources are all configured for the use. The network device may alternatively configure a use of a CSI resource for a CSI-RS resource set. In this case, a plurality of CSI-RS resources associated with the CSI-RS resource set may be used as a group of CSI resources, and the CSI resources are all configured for the use.

Optionally, in this application, different types of CSI resources may be configured in different manners. Different types of CSI resources means that CSI resources may be periodic CSI resources, semi-persistent CSI resources, and aperiodic CSI resources.

For the periodic CSI-RS resource and the semi-persistent CSI-RS resource, the network device may configure the use of the CSI resource by using a CSI resource pattern. In other words, the first information may be a CSI resource pattern. The CSI resource pattern may also be referred to as a periodic pattern, and may be used for determining a time domain position of a CSI resource whose use is at least one of CSI information collection, AI model performance monitoring, and AI model inference. Therefore, after determining a time domain position of the first CSI resource, the terminal apparatus may determine the use of the first CSI resource based on the resource pattern.

In an example, the CSI resource pattern may indicate whether a CSI resource is used for a specific use. An example in which the specific use is the AI model inference is used, the CSI resource pattern may indicate, in order, a quantity of consecutive CSI-RS resources whose use is the AI model inference, and/or a quantity of consecutive CSI-RS resources whose use is not the AI model inference. As shown in FIG. 6, the periodic pattern may perform indication in the following manner: four consecutive CSI-RSs used for the model inference and one CSI-RS resource not used for the model inference. In addition, an indication manner may be alternatively a bitmap (bitmap) manner. 1 represents a CSI-RS resource whose use is the AI model inference, and 0 represents a CSI-RS resource whose use is not the AI model inference. For example, the periodic pattern shown in the following figure may perform indication in the following manner: 11110. It may be understood that different CSI-RS resources in FIG. 6 have different time domain positions.

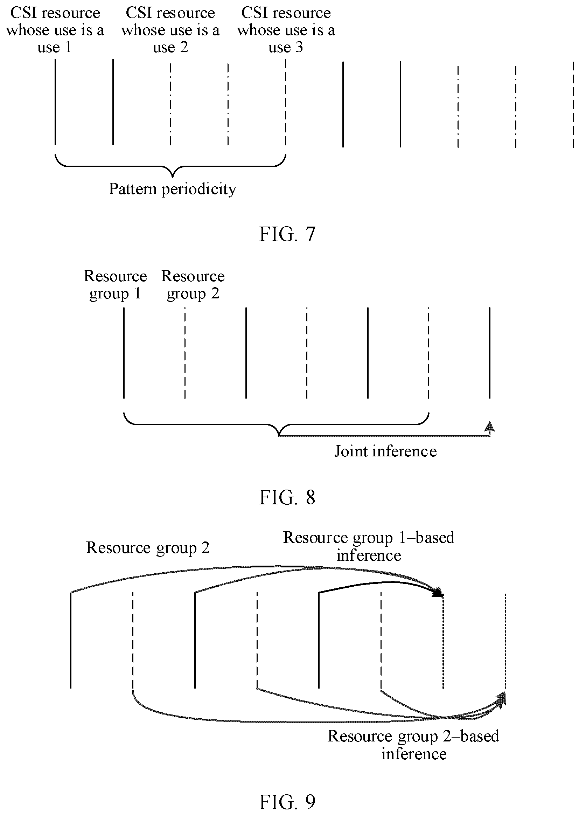

In another example, the CSI resource pattern may indicate a quantity of consecutive CSI resources for each use. Using three possible uses: the CSI information collection, the AI model performance monitoring, and the AI model inference as an example, a specific indication manner may be that quantities of consecutive CSI-RSs used for the uses are indicated in order. For example, as shown in FIG. 7, the CSI resource pattern may perform indication in the following manner: two consecutive CSI-RS resources whose use is the CSI information collection (for example, denoted as a use 1), two consecutive CSI-RSs whose function is the AI model inference (for example, denoted as a use 2), and one CSI-RS whose use is the AI model performance monitoring (for example, denoted as a use 3).

It may be understood that when the CSI resource pattern indicates the use of the CSI resource, a start time domain position (or a moment) of the CSI resource indicated by the CSI resource pattern may be predefined or configured by the network device. For example, starting from a 1st CSI-RS resource that is after a moment t+t1 may be predefined in a manner such as a protocol, where t is a moment at which the CSI-RS resource is configured, t1 is a predefined or configured time offset value, and t is greater than or equal to 0. Optionally, a unit used for describing time in this application may be one of an OFDM symbol, a slot, a subframe, a frame, or a superframe, or may be a combination of one or more of the units.

In addition, for the aperiodic CSI resource, each CSI-RS resource set includes only one CSI-RS resource. Therefore, the network device may indicate a use of the CSI-RS resource set, to implement use indication of the aperiodic CSI resource.

Optionally, if CSI resources configured by the network device for a plurality of resource groups have a same use, CSI resources in the plurality of resource groups may be jointly used, or may be used for a same task. For example, as shown in FIG. 8, both a use of a CSI resource in a CSI resource group 1 and a use of a CSI resource in a CSI resource group 2 are AI model inference. In this case, the terminal apparatus may jointly input CSI information corresponding to the CSI resource in the CSI resource group 1 and CSI information corresponding to the CSI resource in the CSI resource group 2 into the AI model, to obtain predicted CSI information. Therefore, when the terminal apparatus finds that CSI prediction performance deteriorates, for example, the prediction performance deteriorates because a moving speed of the terminal apparatus increases and the like, one group of CSI resources may be additionally configured. The terminal apparatus uses two or more groups of CSI resources to predict CSI information, so that time domain density existed when the two groups of CSI resources are combined increases, and the CSI prediction performance can be improved.

In addition, CSI resources for a same use in this application may alternatively be independently used, or may be used to perform different tasks. For example, as shown in FIG. 9, both a use of a CSI resource in a CSI resource group 1 and a use of a CSI resource in a CSI resource group 2 are AI model inference. In this case, the terminal apparatus may input the CSI resource in the CSI resource group 1 into the AI model to obtain predicted CSI information 1, and the terminal apparatus may input the CSI resource in the CSI resource group 2 into the AI model to obtain predicted CSI information 2. Therefore, the terminal apparatus may obtain CSI prediction results at different time domain positions based on CSI resources in different resource groups.

Further, optionally, the terminal apparatus may determine, by using any one or more of the following manners 1 to 3, whether a CSI resource in the first resource group is jointly used with a CSI resource in a second resource group.

Manner 1: Determine depending on whether the CSI resource in the first resource group and the CSI resource in the second resource group correspond to a same CSI report configuration.

If the CSI resource in the first resource group and the CSI resource in the second resource group are included in a same CSI report configuration, the terminal apparatus may jointly use the CSI resource in the first resource group and the CSI resource in the second resource group when the use of the CSI resource in the first resource group is the same as the use of the CSI resource in the second resource group.

Manner 2: Determine depending on whether the CSI resource in the first resource group and the CSI resource in the second resource group have a quasi co-location (quasi co-location, QCL) relationship. The quasi co-location may also be referred to as quasi-co-location, quasi co-site, or co-location. When two CSI resources have a quasi co-location relationship, it indicates that CSI information corresponding to the two CSI resources has some similar properties, for example, has similar delay spreads or beams. Optionally, in manner 2, it is alternatively required that, when the CSI resource in the first resource group and the CSI in the second resource group have a specific quasi co-location relationship, the terminal apparatus jointly uses the CSI resources in the two resource groups. The specific quasi co-location relationship is a quasi co-location relationship such as a type A (type A) to a type D.

Manner 3: Determine based on additional configuration information.

For example, an identifier may be carried in a CSI report configuration or another configuration. If the CSI resource in the first resource group and the CSI resource in the second resource group are jointly used, the CSI resource in the first resource group and the CSI resource in the second resource group may be configured with a same identifier. If CSI resources in different resource groups do not need to be jointly used, different identifiers may be set for the two resource groups. In addition, the network device may alternatively include, in a form of indication information, indexes (such as CSI-ReportConfigId, an identifier of a CSI resource set list, or an identifier of a CSI resource set) of a plurality of resource groups or indexes (such as CSI-ResourceConfigId) of a plurality of resources that need to be jointly used, or include indexes of a plurality of resource groups or resources that do not need to be jointly used.

It may be understood that the manner 1 to the manner 3 may alternatively be implemented in combination. For example, when the CSI resource in the first resource group and the CSI resource in the second resource group correspond to a same CSI report configuration and have a quasi co-location relationship, the terminal apparatus jointly uses the CSI resources in the two resource groups.

Optionally, the first information may further indicate at least one of the following information.

1. AI model

When the network device indicates a use of a CSI resource by using a CSI report configuration, if the use of the CSI resource includes AI model inference and/or AI model performance monitoring, the first information may further indicate the AI model. For example, the CSI report configuration may carry an index or an identifier of the AI model, to indicate the terminal apparatus to use the corresponding AI model to predict CSI information and/or monitor performance of the corresponding AI model.

2. Prediction configuration of a CSI report

The prediction configuration of the CSI report may indicate specific content of CSI information included by the terminal apparatus in the CSI report as follows.

(a) The prediction configuration of the CSI report indicates that the CSI information carried in the CSI report is a CSI measurement result or indicates that the CSI information carried in the CSI report is predicted CSI information. If the prediction configuration of the CSI report indicates that the CSI information reported by the terminal device is the CSI measurement result, the terminal device does not need to include the CSI information predicted by using the AI model to the CSI report. In addition, if the prediction configuration of the CSI report indicates that the CSI information reported by the terminal device is the predicted CSI information, the terminal device needs to include the CSI information predicted by using the AI model to the CSI report.

In another possible implementation, the prediction configuration of the CSI report may be specific to one type of CSI information, and indicate that the type of CSI information is a CSI measurement result or predicted CSI information. Different types of CSI information may include a PMI, a CQI, or an RI. In other words, the PMI, the CQI, and the RI may be separately used as one type of CSI information. For example, when the CSI report includes the PMI, the CQI, and the RI, the prediction configuration of the CSI report may only indicate that the PMI is a CSI measurement result or predicted CSI information. In addition, the prediction configuration of the CSI report may alternatively be for all types of CSI information. For example, when the CSI report includes the PMI, the CQI, and the RI, the prediction configuration of the CSI report may indicate that the PMI, the CQI, and the RI are all CSI measurement results or predicted CSI information.

(b) The prediction configuration of the CSI report indicates a time range length (or a quantity of moments) corresponding to the CSI information carried in the CSI report. For example, the prediction configuration of the CSI report indicates that the CSI information included by the terminal device in the CSI report is CSI information at one moment, CSI information at two moments, or CSI information at three moments.

(c) The prediction configuration of the CSI report indicates a time domain position (or a moment) of a time range corresponding to the CSI information carried in the CSI report. For example, the prediction configuration of the CSI report indicates a specific moment of each piece of CSI information included by the terminal device in the CSI report, for example, t+5 ms or t+8 ms, where t is a predefined or preconfigured reference moment.

In another possible implementation, the prediction configuration of the CSI report may alternatively indicate that the terminal device determines specific content of the CSI information carried in the CSI report. In this case, the terminal apparatus needs to notify the network device of the foregoing information. For example, the terminal apparatus needs to notify the network device of at least one piece of information such as whether the CSI information carried in the CSI report is a CSI measurement result or predicted CSI information, the time range length (or the quantity of moments) corresponding to the CSI information carried in the CSI report, and the time domain position (or the moment) of the time range corresponding to the CSI information carried in the CSI report. A manner in which the terminal apparatus notifies the network device of the foregoing information is not specifically required. For example, the terminal apparatus may notify the network device by using uplink control information, uplink data, or the like.

3. Compression configuration of CSI information

The compression configuration may alternatively be a compression configuration of a CSI report. The compression configuration may indicate whether compression of the CSI information is based on AI or a codebook, and/or when the compression is based on the AI, indicate whether CSI prediction and CSI compression are jointly processed by using one AI model, or CSI prediction is first performed by using one AI model and then a prediction result is compressed by using one AI model, that is, indicate whether CSI prediction and CSI compression are implemented by using one AI model or two different AI models.

Optionally, before S101, the terminal apparatus may send UE capability information (which may also be referred to as auxiliary information or the like, and is referred to as capability information for short below). The capability information may be used by the network device to determine the first information, or the capability information may be used to trigger the network device to send the first information, or the capability information may be used to assist the network device in configuring a CSI resource.

The capability information may include at least one of the following pieces of information.

(1) Information indicating whether the terminal apparatus supports CSI prediction

For example, the information may indicate whether the terminal apparatus supports CSI prediction, or whether CSI prediction is supported in a current environment. Based on the information, the network device may avoid sending, to a terminal apparatus that does not support CSI prediction, a CSI resource configuration for the AI model inference.

(2) CSI periodicity information

The information may indicate a requirement of the AI model of the terminal apparatus for a periodicity of input CSI information. Therefore, the information may also be referred to as information about a requirement of the AI model of the terminal apparatus for the periodicity of the input CSI information. Optionally, the information may include one or more pieces of the following information: information indicating whether only periodic CSI information can be input into the AI model, information indicating whether aperiodic CSI information can be input into the AI model, information about a time domain pattern of aperiodic CSI information that can be input into the AI model, a quantity of periodicities of CSI information that can be input into the AI model, and a specific value of a periodicity of CSI information that can be input. The terminal apparatus may have a plurality of AI models, and different AI models may support different CSI information periodicities. Therefore, a quantity of periodicities of CSI information that can be input into the AI model may not be 1.

(3) Observation window of the AI model

The information may indicate a requirement of the AI model for an amount of input CSI information. Therefore, the information may also be referred to as information about a requirement of the AI model of the terminal apparatus for an amount of input CSI information. Optionally, the information may include one or more pieces of the following information: information indicating whether only a fixed quantity of pieces of CSI information can be input in a prediction process, information indicating whether any quantity of pieces of CSI information can be input in the prediction process, or a specific value of an amount of CSI information that can be input.

(4) Prediction window of the AI model

The information may indicate a moment output by the AI model through AI model inference. Therefore, the information may also be referred to as information about a moment output by the AI model of the terminal apparatus through AI model inference. Optionally, the information may include one or more pieces of the following information: information indicating whether only CSI information at a future fixed moment can be output, for example, only CSI information at a moment t+t1 can be output, where t is a current moment or a last moment of input CSI information, and t1 is a fixed value or a value related to a periodicity of input CSI information; information indicating whether CSI information at any future moment can be output; and a specific future moment of CSI information that can be output.

(5) Information about a requirement of the AI model for a frequency domain attribute of the input CSI information

The information may indicate a requirement of the terminal apparatus for an attribute like a frequency domain resource of CSI information that is input to the AI model for prediction. Optionally, the information may include one or more pieces of the following information: information indicating whether only CSI information with a fixed bandwidth can be input, information indicating whether CSI information with a variable bandwidth can be input, information indicating whether CSI information corresponding to a plurality of different bandwidths can be input one time, a frequency domain range of CSI information that can be input, a specific value of a bandwidth of CSI information that can be input, and a frequency domain granularity of CSI information that can be input. The frequency domain granularity is, for example, one resource element (resource element, RE), one resource block (resource block, RB), or another granularity. This is not specifically limited.

(6) Frequency domain attribute information of CSI information that can be output by the AI model

The information may indicate a requirement of the terminal apparatus for a frequency domain attribute of CSI information that can be predicted. Optionally, the information may include one or more of the following: information indicating whether only CSI information with a fixed bandwidth can be output, information indicating whether CSI information with a variable bandwidth can be output, information indicating whether CSI information corresponding to a plurality of different bandwidths can be output one time, a frequency domain range of CSI information that can be output, a specific value of a bandwidth of CSI information that can be output, and a frequency domain granularity of CSI information that can be output, for example, one RE, one RB, or another granularity.

(7) Information about a requirement of the AI model for a dimension of input and/or output CSI information

The dimension includes at least one of a frequency domain dimension, a time domain dimension, and a space domain dimension.

(8) Information about a requirement of the AI model for a type of the input and/or output CSI information

For example, the information may indicate whether the CSI information is channel information or a feature vector of the channel information.

(9) Information about a requirement of the AI model for a reference signal used for CSI information measurement

For example, the information may indicate a beam configuration (for example, a precoding configuration) of a reference signal supported by the AI model and/or a configuration (for example, an identifier of a reference signal configuration) of a supported reference signal.

It may be understood that when receiving the foregoing capability information, the network device may configure the CSI resource based on the capability information. For example, when the capability information carries information indicating that the terminal apparatus supports CSI prediction, the network device may configure, for the terminal apparatus, a CSI resource whose use is AI model inference. For another example, the CSI resource whose use is AI model inference and that is configured by the network device for the terminal apparatus meets the observation window of the AI model, the requirement of the AI model for the frequency domain attribute of input CSI information, the requirement of the AI model for the dimension of input CSI information, and the requirement of the AI model for the type of input CSI information that are carried in the capability information.

Optionally, before S101, the terminal apparatus may further send resource request information to request a CSI resource. The resource request message may be used for requesting CSI resources for one or more specific uses, for example, may carry a use index. The request message may also be used for requesting a resource group and/or a CSI resource jointly used with a resource group (for example, the first resource group) and/or a CSI resource (for example, the first CSI resource), for example, may carry an index of the first resource group and/or an index of the first CSI resource. Optionally, the resource request message may include the capability information.

S102: The terminal apparatus sends the first CSI information based on the first information, and/or monitors performance of an AI model based on the first information.

The first CSI information corresponds to the first CSI resource, for example, the first CSI information is a CSI measurement result or predicted CSI information obtained based on the first CSI resource. For example, with reference to the descriptions of S101, when the use includes the AI model inference, the first CSI information is CSI information predicted based on the first CSI resource and the AI model; when the use of the first CSI resource includes the CSI information collection, AI model training, or the AI model performance monitoring, the first CSI information includes a CSI measurement result obtained by measuring the first CSI resource; or when the use includes the AI model performance monitoring, the first CSI information may include a monitoring result of the AI model.

According to the method shown in FIG. 5, the terminal apparatus may learn of a use of the CSI information based on the first information from the network device, to avoid using the CSI resource for an incorrect use. Therefore, reliability of CSI prediction can be improved.

Based on a same concept, an embodiment of this application further provides a communication apparatus. The communication apparatus may include corresponding hardware structures and/or software modules for performing the functions shown in the foregoing methods. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

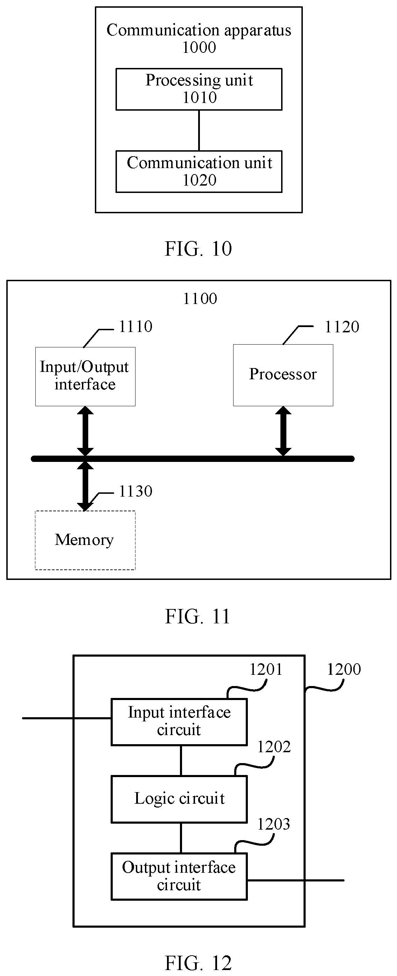

FIG. 10 to FIG. 12 are diagrams of structures of possible communication apparatuses according to embodiments of this application. The communication apparatuses may be configured to implement functions of the network device and/or the first terminal apparatus in the foregoing method embodiment, and therefore can also implement beneficial effects of the foregoing method embodiment. In a possible implementation, the communication apparatus may be the network device or the terminal device shown in FIG. 1. For related details and effects, refer to the descriptions in the foregoing embodiments.

As shown in FIG. 10, a communication apparatus 1000 includes a processing unit 1010 and a communication unit 1020. The communication unit 1020 may implement a corresponding communication function, and the processing unit 1010 is configured to process data. The communication unit 1020 may alternatively be a transceiver unit, an input/output interface, or the like. The communication apparatus 1000 may be configured to implement functions of the terminal apparatus and/or the network device in the method embodiment shown in FIG. 5.

For example, when an action performed by the terminal apparatus is implemented, the communication unit 1020 may be configured to receive first information. The communication unit 1020 may be further configured to send first CSI information, and/or the processing unit 1010 may be configured to monitor performance of an AI model based on the first information.

Optionally, the communication unit 1020 may be further configured to send capability information.

Optionally, the communication unit 1020 may be further configured to receive second information.

For another example, when an action performed by the network device is implemented, the communication unit 1020 may be configured to send the first information to the terminal apparatus. Optionally, the first information may be generated by the processing unit 1010.

Optionally, the communication unit 1020 may be further configured to receive the first CSI information from the terminal apparatus.

Optionally, the communication unit 1020 may be further configured to receive capability information of the terminal apparatus.

Optionally, the communication unit 1020 may be further configured to send second information.

For the foregoing technical terms, refer to the descriptions of the method embodiment. Details are not described herein again.

It may be understood that in embodiments of this application, division into modules is an example, is merely logical function division, and may be other division during actual implementation. In addition, functional modules in embodiments of this application may be integrated into one processor, each module may exist alone physically, or two or more modules may be integrated into one module. The integrated module may be implemented in the form of hardware, or may be implemented in the form of a software functional module.

FIG. 11 shows a communication apparatus 1100 according to an embodiment of this application. The communication apparatus 1100 is configured to implement the communication method provided in this application. The communication apparatus 1100 may be a communication apparatus to which the communication method is applied, or may be a component in the communication apparatus, or may be an apparatus that can be used in combination with the communication apparatus. The communication apparatus 1100 may be a network device and/or a terminal apparatus. The communication apparatus 1100 may be a chip system or a chip. In this embodiment of this application, the chip system may include a chip, or may include a chip and another discrete device. The communication apparatus 1100 includes at least one processor 1120, configured to implement the communication method provided in embodiments of this application. The communication apparatus 1100 may further include an input/output interface 1110, and the input/output interface may include an input interface and/or an output interface. In this embodiment of this application, the input/output interface 1110 may be configured to communicate with another apparatus via a transmission medium, and a function of the input/output interface 1110 may include sending and/or receiving. For example, when the communication apparatus 1100 is a chip, the communication apparatus 1100 performs transmission with another chip or device through the input/output interface 1110. The processor 1120 may be configured to implement the method described in the foregoing method embodiments.

For example, the processor 1120 may be configured to perform an action performed by a processing unit 1010, and the input/output interface 1110 may be configured to perform an action performed by the communication unit 1020. Details are not described again.

Optionally, the communication apparatus 1100 may further include at least one memory 1130, configured to store program instructions and/or data. The memory 1130 is coupled to the processor 1120. The coupling in this embodiment of this application may be an indirect coupling or a communication connection between apparatuses, units, or modules in an electrical form, a mechanical form, or another form, and is used for information exchange between the apparatuses, the units, or the modules. The processor 1120 may operate with the memory 1130 together. The processor 1120 may execute the program instructions stored in the memory 1130. At least one of the at least one memory may be integrated with the processor.

In this embodiment of this application, the memory 1130 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

In this embodiment of this application, the processor 1120 may be a general-purpose processor, a digital signal processor, an application-specific integrated circuit, a field programmable gate array or another programmable logic device, a discrete gate or a transistor logic device, or a discrete hardware component, and may implement or perform the method, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 12 shows a communication apparatus 1200 according to an embodiment of this application. The communication apparatus 1200 is configured to implement the communication method provided in this application. The communication apparatus 1200 may be a communication apparatus to which the communication method in embodiments of this application is applied, or may be a component in the communication apparatus, or may be an apparatus that can be used in combination with the communication apparatus. The communication apparatus 1200 may be a network device and/or a terminal apparatus. The communication apparatus 1200 may be a chip system or a chip. In this embodiment of this application, the chip system may include a chip, or may include a chip and another discrete device. A part or all of the communication method provided in the foregoing embodiments may be implemented by hardware or software. When the communication method is implemented by hardware, the communication apparatus 1200 may include an input interface circuit 1201, a logic circuit 1202, and an output interface circuit 1203.

Optionally, an example in which the apparatus is configured to implement a function of a receive end. The input interface circuit 1201 may be configured to perform the receiving action performed by the communication unit 1020, the output interface circuit 1203 may be configured to perform the sending action performed by the communication unit 1020, and the logic circuit 1202 may be configured to perform the action performed by the processing unit 1010. Details are not described again.

Optionally, in a specific implementation, the communication apparatus 1200 may be a chip or an integrated circuit.

Some or all of operations and functions performed by the communication apparatus described in the foregoing method embodiments of this application may be implemented by using the chip or the integrated circuit.

An embodiment of this application provides a computer-readable storage medium storing a computer program. The computer program includes instructions for performing the foregoing method embodiment.

An embodiment of this application provides a computer program product including instructions. The instructions, when executed on a computer, cause the computer to perform the foregoing method embodiments.

An embodiment of this application provides a communication system, including at least one terminal apparatus and a network device. For example, the communication system includes the architecture shown in FIG. 1. The terminal apparatus and the network device may be configured to perform the method shown in FIG. 5.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

It should be noted that a part of this patent application document includes copyright-protected content. Except for making copies of patent documents of the China National Intellectual Property Administration or recorded content of patent documents, the copyright owner reserves the copyright.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification are used to represent computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and components displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. When functions are implemented in the form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving first information, wherein the first information indicates a use of a first channel state information CSI resource, and the use of the CSI resource comprises at least one of the following: CSI information collection, artificial intelligence AI model performance monitoring, and AI model inference; and
   sending first CSI information based on the first information; and/or
   monitoring performance of an AI model based on the first information, wherein
   the first CSI information corresponds to the first CSI resource.

2. The method according to claim 1, wherein the AI model is used for CSI prediction.

3. The method according to claim 1 or 2, wherein when the use comprises the AI model inference, the first CSI information comprises CSI information predicted based on the first CSI resource and the AI model;

   when the use comprises the CSI information collection or the AI model performance monitoring, the first CSI information comprises a CSI measurement result obtained by measuring the first CSI resource; or
   when the use comprises the AI model performance monitoring, the first CSI information comprises a monitoring result of the AI model, and the monitoring result indicates accuracy of a prediction result of the AI model.

4. The method according to any one of claims 1 to 3, wherein the method further comprises:
   sending capability information, wherein the capability information comprises at least one of the following:

   information indicating whether a terminal apparatus supports CSI prediction;
   information about a requirement of an AI model of the terminal apparatus for a periodicity of input CSI information;
   information about a requirement of the AI model of the terminal apparatus for an amount of input CSI information;
   information about a moment of predicted CSI information output by the AI model of the terminal apparatus;
   information about a requirement of the AI model of the terminal apparatus for a frequency domain attribute of the input CSI information;
   frequency domain attribute information of CSI information that can be output by the AI model of the terminal apparatus;
   information about a requirement of the AI model of the terminal apparatus for a dimension of input and/or output CSI information;
   information about a requirement of the AI model of the terminal apparatus for a type of the input and/or output CSI information; and
   information about a requirement of the AI model of the terminal apparatus for a reference signal used for CSI information measurement.

5. The method according to claim 1, wherein the first information further indicates a compression configuration of CSI information, and sending the first CSI information based on the use comprises:
   sending the first CSI information based on the compression configuration.

6. The method according to any one of claims 1 to 5, wherein the first information specifically indicates a use of a CSI resource in a first resource group, and the CSI resource in the first resource group comprises the first CSI resource.

7. The method according to any one of claims 1 to 6, wherein the first information further indicates a use of a second CSI resource in the first resource group, and the use of the second CSI resource is different from that of the first CSI resource.

8. The method according to claim 6, wherein the CSI resource in the first resource group and a CSI resource in a second resource group are jointly used, and a use of the CSI resource in the second resource group is the same as the use of the CSI resource in the first resource group.

9. The method according to claim 8, wherein the CSI resource in the first resource group and the CSI resource in the second resource group correspond to a same CSI report configuration;

   the CSI resource in the first resource group and the CSI resource in the second resource group are associated with a same AI model; or
   the CSI resource in the first resource group and the CSI resource in the second resource group have a quasi co-location QCL relationship.

10. The method according to claim 8 or 9, wherein the method further comprises:
   receiving second information, wherein the second information indicates that the CSI resource in the first resource group and the CSI resource in the second resource group are jointly used.

11. The method according to any one of claims 1 to 10, wherein the first information specifically indicates a CSI resource pattern, and the CSI resource pattern is used for determining a time domain position of a CSI resource whose use is at least one of CSI information collection, AI model performance monitoring, and AI model inference.

12. The method according to any one of claims 1 to 11, wherein the first information further indicates at least one of the following:

   the AI model; and
   a prediction configuration of the CSI information.

13. A communication method, comprising:
   sending first information to a terminal apparatus, wherein the first information indicates a use of a first channel state information CSI resource, and the use of the CSI resource comprises at least one of the following: CSI information collection, artificial intelligence AI model performance monitoring, and AI model inference.

14. The method according to claim 13, wherein the method further comprises:
   receiving first CSI information from the terminal apparatus, wherein the first CSI information corresponds to the first CSI resource.

15. The method according to claim 13 or 14, wherein the AI model is used for CSI prediction.

16. The method according to claim 13, wherein when the use comprises the AI model inference, the first CSI information comprises CSI information predicted based on the first CSI resource and the AI model;

   when the use comprises the CSI information collection or the AI model performance monitoring, the first CSI information comprises a CSI measurement result obtained by measuring the first CSI resource; or
   when the use comprises the AI model performance monitoring, the first CSI information comprises a monitoring result of the AI model, and the monitoring result indicates accuracy of a prediction result of the AI model.

17. The method according to any one of claims 13 to 16, wherein the method further comprises:
   receiving capability information of the terminal apparatus, wherein the capability information comprises at least one of the following:

   information indicating whether the terminal apparatus supports CSI prediction;
   information about a requirement of an AI model of the terminal apparatus for a periodicity of input CSI information;
   information about a requirement of the AI model of the terminal apparatus for an amount of input CSI information;
   information about a moment of predicted CSI information output by the AI model of the terminal apparatus;
   information about a requirement of the AI model of the terminal apparatus for a frequency domain attribute of the input CSI information;

frequency domain attribute information of CSI information that can be output by the AI model of the terminal apparatus;

information about a requirement of the AI model of the terminal apparatus for a dimension of input and/or output CSI information;

information about a requirement of the AI model of the terminal apparatus for a type of the input and/or output CSI information; and

information about a requirement of the AI model of the terminal apparatus for a reference signal used for CSI information measurement.

18. The method according to claim 13, wherein the first information further indicates a compression configuration of CSI information.

19. The method according to any one of claims 13 to 18, wherein the first information specifically indicates the use of a CSI resource in a first resource group, and the CSI resource in the first resource group comprises the first CSI resource.

20. The method according to any one of claims 13 to 19, wherein the first information further indicates a use of a second CSI resource in the first resource group, and the use of the second CSI resource is different from that of the first CSI resource.

21. The method according to claim 20, wherein the CSI resource in the first resource group and a CSI resource in a second resource group are jointly used, and a use of the CSI resource in the second resource group is the same as the use of the CSI resource in the first resource group.

22. The method according to claim 21, wherein the CSI resource in the first resource group and the CSI resource in the second resource group correspond to a same CSI report configuration;

the CSI resource in the first resource group and the CSI resource in the second resource group are associated with a same AI model; or

the CSI resource in the first resource group and the CSI resource in the second resource group have a quasi co-location QCL relationship.

23. The method according to claim 21 or 22, wherein the method further comprises:
sending second information, wherein the second information indicates that the CSI resource in the first resource group and the CSI resource in the second resource group are jointly used.

24. The method according to any one of claims 13 to 23, wherein the first information specifically indicates a CSI resource pattern, and the CSI resource pattern is used for determining a time domain position of a CSI resource whose use is at least one of CSI information collection, AI model performance monitoring, and AI model inference.

25. The method according to any one of claims 13 to 24, wherein the first information further indicates at least one of the following:

the AI model; and
a prediction configuration of the CSI information.

26. A communication apparatus, comprising a processor, wherein the processor is configured to execute computer program instructions stored in a memory, to implement the method according to any one of claims 1 to 12 or the method according to any one of claims 13 to 25.

27. A computer-readable storage medium, comprising computer program instructions, wherein when the computer program instructions are executed by a computer, the computer is enabled to implement the method according to any one of claims 1 to 12 or the method according to any one of claims 13 to 25.

28. A communication apparatus, comprising a module configured to implement the method according to any one of claims 1 to 25.

FIG. 1

FIG. 2

FIG. 3

CSI-RS      CSI-RS      CSI-RS      CSI-RS

Prediction

AI channel prediction

**FIG. 4**

Network device

Terminal apparatus

S101: First information

S102: Send first CSI information based on the first information, and/or monitor performance of an AI model based on the first information

**FIG. 5**

CSI resource whose use is a specific use

CSI resource whose use is not the specific use

Pattern periodicity

**FIG. 6**

CSI resource whose use is a use 1  CSI resource whose use is a use 2  CSI resource whose use is a use 3

Pattern periodicity

FIG. 7

Resource group 1  Resource group 2

Joint inference

FIG. 8

Resource group 2  Resource group 1–based inference

Resource group 2–based inference

FIG. 9

Communication apparatus
1000

Processing unit
1010

Communication unit
1020

FIG. 10

1100

1110

Input/Output
interface

1120

Processor

1130

Memory

FIG. 11

1201
1200

Input interface
circuit

1202

Logic circuit

1203

Output interface
circuit

FIG. 12

## INTERNATIONAL SEARCH REPORT

International application No.

**PCT/CN2023/139826**

| A. | CLASSIFICATION OF SUBJECT MATTER |
|---|---|

H04B7/06(2006.01)i

According to International Patent Classification (IPC) or to both national classification and IPC

| B. | FIELDS SEARCHED |
|---|---|

Minimum documentation searched (classification system followed by classification symbols)

IPC: H04B，H04L，H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, WPABS: AI, 机器学习, 人工智能, ML, 信道状态信息, CSI, 收集, 报告, 反馈, 上报, 资源, 参考信号, RS, 监控, 监视, 评估, 性能, 推断, 推测, 预测, 用途, 用于, 指示, 配置, 分配, artificial intelligence, machine learning, channel state information, collect, report, feedback, resource, reference signal, monitor, evaluate, performance, predict, forecast, estimate, usage, use, indicate, idendify, configurate, distribute, allocate

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 111786759 A (OPPO GUANGDONG MOBILE TELECOMMUNICATIONS CORP., LTD.) 16 October 2020 (2020-10-16)<br>    description, paragraphs [0062]-[0079] | 1-28 |
| Y | WO 2021242393 A1 (QUALCOMM INCORPORATED) 02 December 2021 (2021-12-02)<br>    description, paragraphs [0030]-[0071], and figures 1-6 | 1-28 |
| Y | CN 114788317 A (BEIJING XIAOMI MOBILE SOFTWARE CO., LTD.) 22 July 2022 (2022-07-22)<br>    description, paragraphs [0089]-[0270] | 4-5, 17-18 |
| A | CN 110268667 A (LG ELECTRONICS INC.) 20 September 2019 (2019-09-20)<br>    entire document | 1-28 |
| A | US 2022329305 A1 (HUAWEI TECHNOLOGIES CO., LTD.) 13 October 2022 (2022-10-13)<br>    entire document | 1-28 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 February 2024** | **22 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/139826** |

| C. | DOCUMENTS CONSIDERED TO BE RELEVANT | |
|---|---|---|
| Category* | Citation of document, with indication, where appropriate, of the relevant passages | Relevant to claim No. |
| A | QUALCOMM INCORPORATED. "Other aspects on AI/ML for CSI feedback enhancement" *3GPP TSG RAN WG1 #109-e, R1-2205025*, 20 May 2022 (2022-05-20), entire document | 1-28 |
| A | LENOVO. "Further aspects of AI/ML for CSI feedback" *3GPP TSG RAN WG1 #109-e, R1-2204418*, 20 May 2022 (2022-05-20), entire document | 1-28 |

Form PCT/ISA/210 (second sheet) (July 2022)

## INTERNATIONAL SEARCH REPORT
### Information on patent family members

International application No.

**PCT/CN2023/139826**

| Patent document cited in search report | | | Publication date (day/month/year) | Patent family member(s) | | | Publication date (day/month/year) |
|---|---|---|---|---|---|---|---|
| CN | 111786759 | A | 16 October 2020 | WO | 2019191924 | A1 | 10 October 2019 |
| | | | | TW | 201943229 | A | 01 November 2019 |
| | | | | CN | 111226453 | A | 02 June 2020 |
| | | | | AU | 2018417486 | A1 | 01 October 2020 |
| | | | | SG | 11202008747 | A1 | 29 October 2020 |
| | | | | IN | 202027042826 | A | 27 November 2020 |
| | | | | KR | 20200138738 | A | 10 December 2020 |
| | | | | EP | 3755028 | A1 | 23 December 2020 |
| | | | | US | 2020404672 | A1 | 24 December 2020 |
| | | | | VN | 75787 | A | 25 February 2021 |
| | | | | JP | 2021520702 | A | 19 August 2021 |
| | | | | RU | 2020132546 | A | 04 April 2022 |
| | | | | EP | 4050834 | A1 | 31 August 2022 |
| WO | 2021242393 | A1 | 02 December 2021 | US | 2021376895 | A1 | 02 December 2021 |
| | | | | EP | 4158810 | A1 | 05 April 2023 |
| | | | | IN | 202227054479 | A | 06 January 2023 |
| | | | | CN | 116210181 | A | 02 June 2023 |
| CN | 114788317 | A | 22 July 2022 | WO | 2023173262 | A1 | 21 September 2023 |
| CN | 110268667 | A | 20 September 2019 | EP | 3579480 | A1 | 11 December 2019 |
| | | | | WO | 2018143721 | A1 | 09 August 2018 |
| | | | | US | 2020112355 | A1 | 09 April 2020 |
| US | 2022329305 | A1 | 13 October 2022 | EP | 4068660 | A1 | 05 October 2022 |
| | | | | WO | 2021134731 | A1 | 08 July 2021 |
| | | | | CN | 114788198 | A | 22 July 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211721001